(19) Europäisches Patentamt
European Patent Office
Office européen des brevets

(11) Publication number: **0 137 258**
**B1**

(12) # EUROPEAN PATENT SPECIFICATION

(45) Date of publication of patent specification: **22.11.90**

(51) Int. Cl.$^5$: **C 01 B 33/14,** B 01 J 21/06, C 08 F 10/00

(21) Application number: **84110078.7**

(22) Date of filing: **23.08.84**

(54) **Zirconia-titania-silica tergels and their use as catalyst supports.**

(30) Priority: **07.10.83 US 540004**

(43) Date of publication of application:
**17.04.85 Bulletin 85/16**

(45) Publication of the grant of the patent:
**22.11.90 Bulletin 90/47**

(84) Designated Contracting States:
**BE DE FR GB NL**

(56) References cited:
**EP-A-0 019 642**
**FR-A-2 187 409**
**GB-A-2 050 858**
**US-A-3 887 494**

(73) Proprietor: **QUANTUM CHEMICAL CORPORATION (a Virginia corp.)**
**99 Park Avenue**
**New York, NY 10016 (US)**

(72) Inventor: **Dombro, Robert Alexander**
**857 N. Marsha Drive**
**Palatine, Ill. 60067 (US)**
Inventor: **Kirch, William**
**1020 8th Avenue North**
**Clinton Iowa 52732 (US)**

(74) Representative: **Schmidt-Evers, Jürgen, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W Melzer Steinsdorfstrasse 10**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 137 258 B1**

## Description

### Background of the Invention

Field of the Invention

This invention relates generally to the field of catalyst supports and, more particularly, this invention relates to zirconia-titania-silica tergels useful as supports for olefin polymerization catalysts.

Description of the Prior Art

The use of xerogels as catalyst supports is well known. Low pore volume, high surface area ceramic-type supports, while suitable for use in hydrocarbon cracking catalysts, are unsuitable for use in olefin polymerization catalysts, as the activities of such catalysts are very low.

One form of xerogel which is useful as a polymerization catalyst support is the medium pore volume silica xerogel. Often, the silica xerogel is a two-component gel comprising zirconia or titania incorporated (in minor proportion) in silica.

One type of silica-zirconia xerogel is produced by depositing zirconia on a silica gel. The deposition of zirconia on a silica gel does not provide a support which, when used in a catalyst, produces polyethylene resins with high melt indexes.

Dombro et al U.S. Pat. No. 4,246,137, describes a method of preparing high pore volume zirconia-silica catalyst supports by coprecipitation, washing and water removal.

Tergels may also be used as polymerization catalyst supports. Hogan et al U.S. Pat. No. 2,825,721 describes a variety of tergels and their use as polymerization catalyst supports.

It is desirable to produce polyolefin resins which have predetermined properties such as high melt index, broad molecular weight distribution, high weight swell, etc., and attempts have been made to produce such resins using catalysts supported on cogels. For example, Hwang et al U.S. Pat. No. 4,128,500 describes a supported chromium (III) acetylacegonate type catalyst. However, prior catalysts supported on cogels and tergels have not been completely successful in providing control of product polymer characteristics.

Summary of the Invention

It is an object of the present invention to overcome one or more of the problems described above.

In accordance with the invention, a high pore volume, high surface area zirconia-titania-silica tergel useful as a catalyst support for an olefin polymerization and copolymerization catalyst is provided. The invention contemplates, without limitation, the method of making the tergel, the tergel itself, catalyst supports and catalysts based upon the tergel, and a method of polymerizing using the catalysts.

More specifically, the present invention contemplates a reaction wherein hydrous zirconia, hydrous titania, and hydrous silica are coprecipitated in aqueous solution. Alkali metal or ammonium salts of zirconium oxalate and titanium oxalate are used as the source of zirconia and titania, respectively. Coprecipitation with silica is acid promoted, and the source of silica is preferably an alkali metal silicate. Such coprecipitation results in intimate and well-distributed incorporation of zirconia and titania in silica.

The hydrotergel so produced is then aged and washed to produce a high pore volume hydrotergel. Water removal from the washed hydrotergel is accomplished by any of a variety of methods, such as those disclosed in Dombro et al U.S. Pat. No. 4,247,137 and Dombro U.S. Pat. No. 4,279,780, or by spray-drying or other suitable techniques.

The resulting xerotergel can be used as is or may be calcined prior to use as an olefin polymerization catalyst support.

Zirconium oxalate compounds, when coprecipitated in a hydrogel, provide advantages as catalyst supports for polymerization, as the zirconium preserves the pore structure of the calcined xerogel and results in product resins with relatively high melt indexes (i.e. relatively low molecular weights).

The xerotergel of the invention has a high pore volume, generally in the range of about 1.5 to 3.5 cc/g ($N_2$-BET) and a high surface area (e.g. about 200 to about 600 $m^2/g$). The actual physical properties obtained are determined in part by the method used to remove water from the hydrotergel. The concentration of zirconia ($ZrO_2$) and of titania ($TiO_2$) with respect to silica may be equal or different and are generally in the range of about 0.1 wt% to about 67.5 wt%, but are preferably between about 0.2 and 5 wt% of each metal oxide.

Further objects and advantages of the invention will be apparent to those skilled in the art from the following detailed description taken in conjunction with the appended claims.

Detailed Description of the Invention

The present invention contemplates the preparation of high pore volume, high surface area zirconia-titania-silica tergels by acid promoted coprecipitation of zirconia and titania with silica, preferably in minor proportion to silica. As a result, zirconia and titania are well distributed and integrated into the bulk of silica.

As detailed below, the use of an alkali metal or ammonium salt of zirconium oxalate (e.g., ammonium tetraoxalatozirconate (IV) pentahydrate) and titanium oxalate (e.g., ammonium bis(oxalato)oxotitanate (IV) monohydrate) as the source of zirconia and titania, respectively, during their acid-promoted coprecipitation with silica from an alkali metal silicate leads to the intimate and well distributed incorporation of zirconia

and titania, preferably in minor proportion, into silica. Coupled with special water removal techniques, also detailed below, as well as other suitable water removal methods, the procedure provides novel porous xerotergel catalyst supports having high pore volume and high surface area.

Hydrotergel Preparation

Preparation of high pore volume zirconia-titania-silica tergels is effected by the coprecipitation of hydrous zirconia, hydrous titania, and hydrous silica.

A zirconium compound of the type:

$$M_4Zr(C_2O_4)_4.nH_2O$$

and a titanium compound of the type:

$$M_2TiO(C_2O_4)_2.nH_2O$$

where M is an alkali metal or ammonium ion and n equals 0 to 10, are reacted with a silicon compound of the type:

$$A_2SiO_3$$

where A is an alkali metal ion, in aqueous solution, preferably at a pH of less than about 9.

It is desirable that the zirconium compound, the titanium compound and the alkali metal silicate be together in solution prior to precipitation. The zirconium compound may be added to the aqueous silicate solution before, after or together with the titanium compound. The pH of this solution determines whether premature precipitation takes place. Where ammonium salts of titanium oxalate and zirconium oxalate are used, it has been found that the pH of the solution must be equal to or greater than about 11 so as to avoid premature precipitation.

The minimum required pH level may vary to some degree if other titanium or zirconium salts are used, but the minimum pH is readily empirically determinable in any case.

The coprecipitation reaction is acid-promoted. Therefore, the reaction may be initiated by addition to the solution of an acidic material (e.g. a mineral acid) to lower the solution's pH, preferably to less than about 9. Preferred acidic materials include sulfuric acid, hydrochloric acid and ammonium sulfate.

The resulting coprecipitated hydrotergel (in aqueous suspension) is then aged, preferably at a temperature between about ambient and 100°C, for at least one hour at a maintained pH of less than about 9, preferably at a pH of about 6.

The aged hydrotergel is then separated from the bulk of the water and washed to remove soluble alkali metal and ammonium salt by-products. Preferably, the aged hydrotergel is first washed with water, then with aqueous ammonium nitrate and again with water. However, it may be washed with water alone, or with any other aqueous liquid in which the by-products are soluble.

The alkali metal and ammonium concentration in the final wash liquid should be less than or equal to about 20 parts per million. After washing, a hydrotergel cake remains which contains about 90% water.

Water Removal

Water is removed from the washed hydrotergel cake to produce the high pore volume xerotergel of the invention. Water removal can be accomplished by any of a variety of methods. For example, water may be removed by azeotropic distillation with a compound capable of forming an azeotrope with water, such as ethyl acetate.

In a second method, water is extracted from the hydrotergel with a water-miscible solvent or mixture of solvents, such as a low molecular weight ketone or a mixture of a ketone and a low molecular weight alcohol.

A third method entails extracting the hydrotergel with a water-miscible solvent or mixture of solvents to remove about 90—95% of the water and then treating the partially dehydrated tergel with a ketal of the formula, $RC(OR)_2R$, in which R is the same or different and is an alkyl group of 1—5 carbon atoms, plus a trace of acid, whereby residual water is completely and irreversibly removed by a chemical reaction.

In a fourth method water is removed by contacting the hydrotergel directly with sufficient ketal in the presence of a trace of acid as catalyst.

Finally, water can be removed from the washed hydrotergel by spray-drying, or by any other suitable method.

The xerotergel is thus freed of absorbed organic compounds. It can then be used as is or may be calcined, preferably at temperatures in the range of 400—1850°F, prior to use as an olefin polymerization catalyst support, or for any other desired purpose. For example, the tergel may be used to immobilize enzymes for use in chemical and food production processes.

Catalyst Supports

Ziegler and chromium type olefin polymerization catalysts are among those which may be supported

on the tergels of the invention. Selection of components depends on what resin properties are desired. Generally, catalysts are made by depositing a catalytically active material, such as a transition metal or chromium compound, on the tergel support, as by means well known in the art, for example.

As an example, a chromium (III) or chromium (VI) compound may be used as the active polymerization ingredient. The chromium compound may be dry blended with or impregnated as a solution onto the xerotergel in a non-aqueous solvent, followed by removal of the solvent. Activation takes place by heating in a fluid bed with dry gases such as air, nitrogen followed by air, nitrogen then air followed by carbon monoxide, etc. Activation temperatures up to 955°C (1750°F) are preferred.

Chromium (III) acetylacetonate is a preferred chromium source since water is not reintroduced when it is dry blended with the xerotergel prior to thermal activation to produce the catalyst.

The following Examples will serve to illustrate the practice of the invention, but unnecessary limitations should not be inferred therefrom.

## EXAMPLES

### Tergel Preparation

#### Example A (Invention)

A solution of 7.6 g ammonium tetraoxalatozirconate (IV) pentahydrate in 200 cc of deionized water (pH 4.3) was added with agitation to a solution of 400 g sodium silicate (6.75 wt.% $Na_2O$, 25.3 wt.% $SiO_2$; wt. ratio $SiO_2/Na_2O$ = 3.75) in 800 cc of deionized water (pH 11.3) over a period of ten minutes. Ammonia was liberated. To this solution, initially at a pH of 11.2, was added a solution of 7 g ammonium bis(oxalato)oxotitanate (IV) monohydrate in 200 cc deionized water over a period of twenty minutes. The final pH was 11.1.

Coprecipitation occurred when a solution of 12 wt.% sulfuric acid was added until a final pH of 6 was reached. The coprecipitated hydrotergel was aged for six hours at about 90°C while the pH was maintained at 6 with additional 12 wt.% sulfuric acid. Following aging, the hydrotergel was collected by filtration and washed first with deionized water, then with a 1% aqueous solution of ammonium nitrate, and finally with deionized water until the sodium ion concentration was about 20 ppm in the final wash. Bulk water was removed by suction filtration to give a hydrotergel cake containing about 90 wt.% water.

A portion of the hydrotergel cake was dehydrated by azeotropic distillation with ethyl acetate to give a xerotergel containing 1.1 wt.% zirconia, 1.0 wt.% titania and about 97.9 wt.% silica. The xerotergel had a bulk density of 0.13 g/cc, an $N_2$ pore volume of 2.49 cc/g and a surface area of 484 $m^2/g$.

#### Example B (Invention)

A 375 g portion of the hydrotergel cake of Example A was dehydrated by mixing with 1200 cc of acetone, allowing the hydrotergel to settle by gravity and decanting the clear upper acetone-water layer. This cycle was repeated four more times with 600 cc of fresh acetone added each time following by removal of about 600 cc of the clear upper acetone-water layer. The acetone-hydrotergel slurry containing about 10 wt.% residual water was collected by suction filtration and then mixed with 220 cc of 2,2-dimethoxypropane plus 1 cc of 10% hydrochloric acid. After thorough mixing all volatiles were removed with mild heat under a $N_2$ atmosphere. Final drying of the xerotergel was at 200°C. The xerotergel had a bulk density of 0.22 g/cc, an $N_2$ pore volume of 2.00 cc/g and a surface area of 431 $m^2/g$.

#### Example C (Invention)

A 375 g portion of the hydrotergel cake of Example A was dehydrated by mixing with sufficient acetone to form 1200 cc of slurry. After efficient agitation the slurry was allowed to settle by gravity. The clear upper acetone-water layer was separated by decantation. This process was repeated four more times. The acetone-hydrotergel slurry containing about 0.6 moles of residual water was treated with 220 cc (1.8 moles) of 2,2-dimethoxypropane plus 1 cc of 10% HCl. All organic compounds were then removed under $N_2$ and mild heat. The remaining xerotergel had a bulk density of 0.24 g/cc.

#### Example D (Invention)

A solution of 7.5 g ammonium tetraoxalatozirconate (IV) pentahydrate in 200 cc of deionized water (pH 4.3) was added with agitation to a solution of 400 g sodium silicate in 800 cc of deionized water (pH 11.6) over a period of twenty minutes. Ammonia was liberated. To this solution, initially at a pH of 11.6, was added a solution of 7.5 g potassium bis(oxalato)oxotitanate (IV) dihydrate in 200 cc of deionized water over a period of twenty-five minutes. The final pH was 10.8.

Coprecipitation occurred in about one hour when a solution of 12 wt.% sulfuric acid was added to a final pH of 6. The coprecipitated hydrotergel was aged for two hours at about 80°C while the pH was maintained at 6 with additional 12% sulfuric acid. Following aging, the hydrotergel was collected and washed as described in Example A.

A portion of the hydrotergel cake was dehydrated by azeotropic distillation with ethyl acetate to give a xerotergel containing 1.4 wt.% zirconia, 1.1 wt.% titania and about 97.5 wt.% silica. The xerotergel had a bulk density of 0.13 g/cc, an $N_2$ pore volume of 2.41 cc/g and a surface area of 475 $m^2/g$.

Example E (Comparative)

A cogel containing zirconia with silica was prepared as described in U.S. Pat. No. 4,246,137, Example No. 8. The xerocogel contained 2.7 wt.% $ZrO_2$ and had an $N_2$ pore volume of 2.45 cc/g.

Example F (Comparative)

This porous support was a commercial high pore volume silica with an $N_2$ pore volume of 2.05 cc/g and a surface area of 285 $m^2/g$.

Catalyst Preparation and Testing

Olefin polymerization catalysts based on the tergels of Examples A to D, the cogel of Example E, and the high pore volume commercial silica of Example F were prepared by dry mixing chromium (III) acetylacetonate with the calcined xerotergels, the cogel and the silica. The tergel and cogel supported catalysts were activated in a fluidized bed with dry $N_2$ at 927°C (1700°F) followed by a 30 minute dry air treatment at 705°C (1300°F). The silica supported catalyst was activated at 871°C (1600°F) in a fluid bed with dry air. The concentration of chromium in the activated catalysts was about 1 wt.%.

Polymerization was conducted in a one gallon (3.8 l) autoclave with isobutane as diluent, under 3792 kPa (550 psi) pressure at 107°C (225°F) and with ethylene fed on demand.

The data in the Table below show that the molecular weight distribution of polyethylene resin produced by chromium catalysts supported on the zirconia-titania-silica tergels of Examples AD is much broader than resin produced from similar catalysts supported on a zirconia-silica cogel or on a high pore volume silica. This is expressed by higher $R_D$ values which measure resin dispersity (polymerization Examples Nos. 1—4 versus Examples Nos. 5 and 6). Together with broad molecular weight distribution these resins also have high melt index (MI) and weight swell ($S_w$) (Examples 2 and 3). Such resins produced by catalysts supported on the tergels of this invention find wide application.

Catalyst and Resin Evaluation

| Polymerization Example No. | Catalyst Support Example No. | Catalyst Productivity (g/g Catalyst) | $R_d$[a] | $S_w$[b] | MI[c] |
|---|---|---|---|---|---|
| 1 | A | 2173 | 8.0 | 4.6 | 0.9 |
| 2 | B | 3893 | 7.7 | 4.8 | 2.4 |
| 3 | C | 4079 | 7.2 | 4.8 | 2.0 |
| 4 | D | 1329 | 6.6 | 4.4 | 0.3 |
| 5 | E | 1600 | 4.0 | 4.9 | 3.4 |
| 6 | F | 5200 | 5.0 | 5.1 | 0.8 |

a) Shida, M. and Cancio, L., "Polymer Engineering and Science", Vol. II, p. 124—128, March, 1971.
b) Cancio, L. and Joyner, R., "Modern Plastics", Jan., 1977.
c) ASTM D—1238—62T Condition E, g/10 minutes. Milled and stabilized.

The foregoing detailed description is given for clearness of understanding only, and no unnecessary limitations should be inferred therefrom, as variations within the scope of the invention will be obvious to those skilled in the art.

**Claims**

1. A method of preparing zirconia-titania-silica tergels comprising the steps of:

a) mixing a zirconium compound of the formula $M_4Zr(C_2O_4)_4.nH_2O$ and a titanium compound of the formula $M_2TiO(C_2O_4)_2.nH_2O$, where M is an alkali metal or ammonium ion and n equals 0 to 10, with a silicon compound of the formula $A_2SiO_3$, where A is an alkali metal ion, in an aqueous solution at a pH sufficiently high to avoid precipitation of a tergel;

b) adding an acidic material to said solution to lower the pH thereof sufficiently to result in precipitation of a hydrotergel having sufficiently large pore volume to render said tergel useful as a catalyst support;

c) aging said hydrotergel of b);

d) washing said aged hydrotergel of c) with an aqueous liquid; and

e) removing water from the washed hydrotergel of d) by a method selected to avoid substantial collapse of the pores of said hydrotergel to produce a xerotergel.

2. The method of claim 1, wherein M is an alkali metal ion.

3. The method of claim 1, wherein M is an ammonium ion.

4. The method of claim 3, wherein said solution pH of step a) is at least about 11.

5. The method of claim 4, wherein said acidic material of step b) is added in an amount sufficient to lower said pH to less than about 9.

6. The method of claim 1, wherein said acidic material is sulfuric acid, hydrochloric acid or ammonium sulfate.

7. The method of claim 1, wherein said aging is done at a temperature between about ambient to 100°C for at least one hour.

8. The method of claim 1, wherein said water is removed from the washed hydrotergel by azeotropic distillation with a compound capable of forming an azeotrope with water.

9. The method of claim 1, wherein said water is removed from the washed hydrotergel by washing the hydrotergel with a water miscible solvent or mixture of solvents.

10. The method of claim 9, wherein said solvent is a low molecular weight ketone or a mixture of a ketone and a low molecular weight alcohol.

11. The method of claim 1, wherein said water is removed from the washed hydrotergel by extracting the hydrotergel with a water miscible solvent or mixture of solvents to remove about 90—95% of the water and then treating the partially dehydrated tergel with a ketal of the formula $RC(OR)_2R$, in which R is the same or different and is an alkyl group of 1—5 carbon atoms, plus a trace of acid, whereby residue water is completely and irreversibly removed.

12. The method of claim 1, wherein said water is removed from the washed hydrotergel by spray-drying.

13. The method of claim 1, comprising the additional step of calcining said xerotergel of e).

14. The method of claim 13, wherein said calcining is done at a temperature of about 204—1010°C (400—1850°F).

15. The method of claim 1, wherein said hydrotergel of b) and said xerotergel of e) have pore volumes of at least about 1.5 cc/g.

16. The method of claim 15, wherein said pore volume is in the range of about 1.5 cc/g to about 3.5 cc/g.

17. The method of claim 1, wherein said zirconium, titanium and silicon compounds of a) are mixed in proportions selected to result in respective independent concentrations of said zirconia and titania of between about 0.1 wt.% and 5 wt.% with respect to said silica.

18. A method of preparing zirconia-titania-silica tergels, comprising the steps of:

a) mixing a zirconium compound of the formula $M_4Zr(C_2O_4)_4.nH_2O$ and a titanium compound of the formula $M_2TiO(C_2O_4)_2.nH_2O$, where M is an alkali metal or ammonium ion and n equals 0 to 10, with a silicon compound of the formula $A_2SiO_3$, where A is an alkali metal ion, in an aqueous solution at a pH sufficiently high to avoid precipitation of a tergel;

b) adding an acidic material to said solution to lower the pH thereof sufficiently to result in precipitation of a porous hydrotergel containing silica, titania and zirconia and having a pore volume of at least about 1.5 cc/g, said zirconium, titanium and silicon compounds of a) being mixed in proportions selected to result in respective independent concentrations of said zirconia and titania of between about 0.1 wt.% and 5 wt.% with respect to said silica;

c) aging said hydrotergel of b);

d) washing said aged hydrotergel of c) with an aqueous liquid; and

e) removing water from the washed hydrotergel of d) by a method selected to avoid substantial collapse of the pores of said hydrotergel to produce a xerotergel having a pore volume of at least about 1.5 cc/g, and optionally calcining the xerotergel.

19. A zirconia-titania-silica tergel prepared by the method of any of claims 1—18.

20. An olefin polymerization or copolymerization catalyst prepared by the method of any of claims 1—12 and 15—18, including the further steps of:

f) calcining said xerotergel of e);

g) introducing a catalytically active compound onto said calcined xerotergel of f); and

h) activating to produce an active polymerization or copolymerization catalyst.

21. The catalyst of claim 20, wherein said calcining step f) is done at a temperature of about 204—1010°C (400°—1850°F).

22. The catalyst of claim 20, wherein said active compound of g) is a chromium compound.

23. The catalyst of claim 20, wherein said active compound of g) is a transition metal compound.

24. The method of polymerizing or copolymerizing olefins comprising contacting said olefins under polymerizing conditions with the catalyst of any of claims 20—23.

**Patentansprüche**

1. Verfahren zur Herstellung von Zirkondioxid-Titandioxid-Siliciumdioxid-Tergelen, umfassend die Schritte:

a) Mischen einer Zirkonverbindung der Formel $M_4Zr(C_2O_4)_4 \cdot nH_2O$ und einer Titanverbindung der Formel $M_2TiO(C_2O_4)_2 \cdot nH_2O$, wobei M ein Alkalimetall- oder Ammoniumion ist und wobei n gleich 0 bis 10 ist, mit einer Siliciumverbindung der Formel $A_2SiO_3$, wobei A ein Alkalimetallion ist, in einer wässrigen Lösung mit einem hinreichend hohen pH-Wert, um ein Niederschlagen eines Tergels zu verhindern;

b) Hinzusetzen eines sauren Materials zu der betreffenden Lösung, um deren pH-Wert genügend abzusenken mit dem Ergebnis eine Niederschlags eines Hydrotergels, welches ein genügend großes Porenvolumen aufweist, um das Tergel als Katalysatorträger geeignet zu machen;

c) Altern des betreffenden Hydrotergels gemäß b);

d) Waschen des gealterten Hydrotergels gemäß c) mit einier wässrigen Flüssigkeit; und

e) Entfernern von Wasser aus dem gewaschenen Hydrotergel gemäß d) mittels eines derart ausgewählten Verfahrens, daß ein Zusammenfallen der Poren des Hydrotergels weitgehend vermieden ist, um ein Xerotergel zu erzeugen.

2. Verfahren nach Anspruch 1, wobei M ein Alkalimetallion ist.

3. Verfahren nach Anspruch 1, wobei M ein Ammoniumion ist.

4. Verfahren nach Anspruch 3, wobei der pH-Wert der Lösung gemäß dem Schritt a) zumindest etwa 11 beträgt.

5. Verfahren nach Anspruch 4, wobei das saure Material gemäß dem Schritt b) in einer solchen hinreichenden Menge hinzugesetzt wird, daß der betreffende pH-Wert auf weniger als etwa 9 vermindert wird.

6. Verfahren nach Anspruch 1, wobei das saure Material Schwefelsäure, Salzsäure oder Ammoniumsulfat ist.

7. Verfahren nach Anspruch 1, wobei das Altern bei einer Temperatur zwischen Raumtemperatur und 100°C zumindest eine Stunde lang vorgenommen wird.

8. Verfahren nach Anspruch 1, wobei das Wasser aus dem gewaschenen Hydrotergel durch azeotrope Destillation mittels einer Verbindung entfernt wird, die mit Wasser ein Azeotrop zu bilden imstande ist.

9. Verfahren nach Anspruch 1, wobei das Wasser aus dem gewaschenen Hydrotergel dadurch entfernt wird, daß das Hydrotergel mit einem mit Wasser mischbaren Lösungsmittel oder einer Mischung von Lösungsmitteln gewaschen wird.

10. Verfahren nach Anspruch 9, wobei das betreffende Lösungsmittel ein ein geringes Molekulargewicht aufweisendes Keton oder eine Mischung eines Ketons und eines ein geringes Molekulargewicht aufweisenden Alkohols ist.

11. Verfahren nach Anspruch 1, wobei das Wasser aus dem gewaschenen Hydrotergel dadurch entfernt wird, daß das Hydrotergel mit einem mit Wasser mischbaren Lösungsmittel oder mit einer Mischung von Lösungsmitteln zur Entfernung von etwa 90 bis 95% des Wassers extrahiert wird und daß dann das partiell dehydrierte Tergel in einem Ketal der Formel $RC(OR)_2R$ behandelt wird, wobei R gleich oder verschieden ist und eine Alkylgruppe von 1—5 Kohlenstoffatomen zuzüglich einer Säurespur ist, wodurch restliches Wasser vollständig und irreversibel entfernt wird.

12. Verfahren nach Anspruch 1, wobei das Wasser aus dem gewaschenen Hydrotergel durch Zerstäubungstrocknung entfernt wird.

13. Verfahren nach Anspruch 1, umfassend den zusätzlichen Schritt des Kalzinierens des betreffenden Xerotergels gemäß e).

14. Verfahren nach Anspruch 13, wobei die betreffende Kalzinierung bei einer Temperatur von etwa 204 bis 1010°C (400—1850°F) vorgenommen wird.

15. Verfahren nach Anspruch 1, wobei das genannte Hydrotergel gemäß b) und das Xerotergel gemäß e) Porenvolumina von zumindest etwa 1,5 $cm^3/g$ aufweisen.

16. Verfahren nach Anspruch 15, wobei das genannte Porenvolumen im Bereich von etwa 1,5 $cm^3/g$ bis 3,5 $cm^3/g$ liegt.

17. Verfahren nach Anspruch 1, wobei die Zirkon-, Titan- und Siliciumverbindungen von a) in derart ausgewählten Verhältnissen gemischt werden, daß sich entsprechende unabhängige Konzentrationen des Zirkondioxids und des Titandioxids zwischen etwa 0,1 Gewichtsprozent und 5 Gewichtsprozent bezogen auf das Siliciumdioxid ergeben.

18. Verfahren zur Herstellung von Zirkondioxid-Titandioxid-Siliciumdioxid-Tergelen, umfassend die Schritte:

a) Mischen einer Zirkonverbindung der Formel $M_4Zr(C_2O_4)_4 \cdot nH_2O$ und einer Titanverbindung der Formel $M_2TiO(C_2O_4)_2 \cdot nH_2O$, wobei M ein Alkalimetall- oder Ammoniumion ist und wobei n gleich 0 bis 10 ist, mit einer Siliciumverbindung der Formel $A_2SiO_3$, wobei A ein Alkalimetallion ist, in einer wässrigen Lösung mit einem hinreichend hohen pH-Wert zur Vermeidung eines Niederschlagens eines Tergels;

b) Hinzusetzen eines sauren Materials zu der betreffenden Lösung, um deren pH-Wert hinreichend zu senken mit dem Ergebnis des Niederschlagens eines porösen Hydrotergels, welches Siliciumdioxid, Titandioxid und Zirkondioxid enthält und ein Porenvolumen von zumindest etwa 1,5 $cm^3/g$ aufweist, wobei die Zirkon-, Titan- und Siliciumverbindungen von a) in derart ausgewählten Verhältnissen gemischt werden, daß sich entsprechende unabhängige Konzentrationen des Zirkondioxids und des Titandioxids zwischen etwa 0,1 Gewichtsprozent und 5 Gewichtsprozent bezogen auf das Siliciumdioxid ergeben;

c) Altern des Hydrotergels gemäß b);

d) Waschen des betreffenden gealterten Hydrotergels gemäß c) mit einer wässrigen Lösung; und

e) Entfernen von Wasser aus dem gewaschenen Hydrotergel gemäß d) mittels eines derart ausgewählten Verfahrens, daß ein Zusammenfallen der Poren des betreffenden Hydrotergels weitgehend vermieden ist, um ein Xerotergel mit einem Porenvolumen von zumindest etwa 1,5 $cm^3/g$ zu erzeugen, und wobei das Xerotergel eventuell kalziniert wird.

19. Zirkondioxid-Titandioxid-Siliciumdioxid-Tergel, hergestellt nach dem Verfahren gemäß irgendeinem der Ansprüche 1 bis 18.

20. Olefin-Polymerisations- oder -Mischpolymerisations-Katalysator, hergestellt nach dem Verfahren gemäß irgendeinem der Ansprüche 1 bis 12 und 15 bis 18, enthaltend die weiteren Schritte:

f) Kalzinieren des genannten Xerotergels gemäß e);

g) Einführen einer katalytisch aktiven Verbindung in das kalzinierte Xerotergel gemäß f); und

h) Aktivieren zur Erzeugung eines aktiven Polymerisations- oder Mischpolymerisations-Katalysators.

21. Katalysator nach Anspruch 20, wobei der Kalzinierungsschritt f) bei einer Temperatur von etwa 204 bis 1010°C (400° bis 1850°F) vorgenommen wird.

22. Katalysator nach Anspruch 20, wobei die genannte aktive Verbindung von g) eine Chromverbindung ist.

23. Katalysator nach Anspruch 20, wobei die genannte aktive Verbindung von g) eine Übergangsmetallverbindung ist.

24. Verfahren zum Polymerisieren oder Mischpolymerisieren von Olefinen, umfassend eine Kontaktbehandlung de Olefine unter Polymerisationsbedingungen mit einem Katalysator gemäß irgendeinem der Ansprüche 20 bis 23.

**Revendications**

1. Procédé de préparation de gels ternaires de zircone-oxyde de titane-silice, qui comprend les étapes consistant:

a) à mélanger un composé de zirconium de formule $M_4Zr(C_2O_4)_4.nH_2O$ et un composé de titane de formule $M_2TiO(C_2O_4)_2.nH_2O$, où M est un ion de métal alcalin ou un ion ammonium et n a une valeur de 0 à 10, avec un composé de silicium de formule $A_2SiO_3$, dans laquelle A est un ion de métal alcalin, en solution aqueuse à un pH suffisamment haut pour éviter la précipitation d'un gel ternaire;

b) à ajouter une matière acide à ladite solution pour abaisser son pH dans une mesure suffisante pour entraîner la précipitation d'un hydrogel ternaire ayant un volume des pores suffisamment grand pour rendre le gel ternaire utile comme support de catalyseur;

c) à soumettre l'hydrogel ternaire de b) à un vieillissement;

d) à laver avec un liquide aqueux l'hydrogel ternaire de c) après vieillissement; et

e) à éliminer l'eau de l'hydrogel ternaire lavé de d) par un procédé choisi de manière à éviter un affaissement notable des pores de l'hydrogel ternaire pour produire un xérogel ternaire.

2. Procédé suivant la revendication 1, dans lequel M est un ion de métal alcalin.

3. Procédé suivant la revendication 1, dans lequel M est un ion ammonium.

4. Procédé suivant la revendication 3, dans lequel le pH de la solution dans l'étape a) est au moins égal à 11 environ.

5. Procédé suivant la revendication 4, dans lequel la matière acide de l'étape b) est ajoutée en une quantité suffisante pour abaisser le pH à une valeur inférieure à 9 environ.

6. Procédé suivant la revendication 1, dans lequel la matière acide est l'acide sulfurique, l'acide chlorhydrique ou le sulfate d'ammonium.

7. Procédé suivant la revendication 1, dans lequel le vieillissement est conduit à une température comprise approximativement entre la température ambiante et 100°C pendant au moins une heure.

8. Procédé suivant la revendication 1, dans lequel l'eau est éliminée de l'hydrogel ternaire lavé par distillation azéotropique avec un composé capable de former un azéotrope avec l'eau.

9. Procédé suivant la revendication 1, dans lequel l'eau est éliminée de l'hydrogel ternaire lavé par lavage de ce dernier avec un solvant ou un mélange de solvants miscible à l'eau.

10. Procédé suivant la revendication 9, dans lequel le solvant est une cétone de bas poids moléculaire ou un mélange d'une cétone et d'un alcool de bas poids moléculaire.

11. Procédé suivant la revendication 1, dans lequel l'eau est éliminée de l'hydrogel ternaire lavé, par extraction de l'hydrogel ternaire avec un solvant miscible à l'eau ou un mélange de tels solvants pour éliminer environ 90—95% de l'eau, puis traitement du gel ternaire partiellement déshydraté avec un cétal de formule $RC(OR)_2R$, dans laquelle les groupes R sont identiques ou différents et représentent un groupe alkyle ayant 1 à 5 atomes de carbone, plus des traces d'un acide, afin d'éliminer complètement et de façon irréversible l'eau résiduelle.

12. Procédé suivant la revendication 1, dans lequel l'eau est éliminée par séchage par pulvérisation de l'hydrogel ternaire lavé.

13. Procédé suivant la revendication 1, qui comprend l'étape additionnelle de calcination du xérogel ternaire de e).

14. Procédé suivant la revendication 13, dans lequel la calcination est effectuée à une température d'environ 204 à 1010°C (400—1850°F).

15. Procédé suivant la revendication 1, dans lequel l'hydrogel ternaire de b) et le xérogel ternaire de e) ont des volumes de pores d'au moins environ 1,5 $cm^3/g$.

16. Procédé suivant la revendication 15, dans lequel le volume des pores se situe dans la plage d'environ 1,5 $cm^3/g$ à environ 3,5 $cm^3/g$.

17. Procédé suivant la revendication 1, dans lequel les composés de zirconium, de titane et de silicium de a) sont mélangés dans des proportions choisies de manière qu'il en résulte des concentrations indépendantes respectives de la zircone et de l'oxyde de titane comprises entre environ 0,1% en poids et 5% en poids relativement à la silice.

18. Procédé de préparation de gels ternaires de zircone-oxyde de titane-silice, qui comprend les étapes consistant:

a) à mélanger un composé de zirconium de formule $M_4Zr(C_2O_4)_4.nH_2O$ et un composé de titane de formule $M_2TiO(C_2O_4)_2.nH_2O$, où M est un ion de métal alcalin ou un ion ammonium et n a une valeur de 0 à 10, avec un composé de silicium de formule $A_2SiO_3$, dans laquelle A est un ion de métal alcalin, en solution aqueuse à un pH suffisamment haut pour éviter la précipitation d'un gel ternaire;

b) à ajouter une matière acide à ladite solution pour abaisser son pH dans une mesure suffisante pour entraîner la précipitation d'un hydrogel ternaire poreux contenant de la silice, de l'oxyde de titane et de la zircone et ayant un volume des pores d'au moins environ 1,5 $cm^3/g$, lesdits composés de zirconium, de titane et de silicium de a) étant mélangés en proportions choisies de manière à obtenir des concentrations indépendantes respectives de zircone et d'oxyde de titane comprises entre environ 0,1% en poids et 5% en poids, relativement à la silice;

c) à soumettre l'hydrogel ternaire de b) à un vieillissement;

d) à laver l'hydrogel ternaire de c) après vieillissement avec un liquide aqueux; et

e) à éliminer l'eau de l'hydrogel ternaire lavé de d) par un procédé choisi de manière à éviter un affaissement notable des pores de l'hydrogel ternaire pour produire un xérogel ternaire ayant un volume des pores d'au moins environ 1,5 $cm^3/g$, et à titre facultatif, à calciner le xérogel ternaire.

19. Gel ternaire de zircone-oxyde de titane-silice préparé par le procédé suivant l'une quelconque des revendications 1 à 18.

20. Catalyseur de polymérisation ou de copolymérisation d'oléfines, préparé par le procédé suivant l'une quelconque des revendications 1 à 12 et 15 à 18, comprenant les étapes complémentaires de:

f) calcination du xérogel ternaire de e);

g) introduction d'un composé doué d'activité catalytique sur le xérogel ternaire calciné de f); et

h) activation pour produire un catalyseur actif de polymérisation ou de copolymérisation.

21. Catalyseur suivant la revendication 20, dans lequel l'étape de calcination f) est conduite à une température d'environ 204 à 1010°C (400 à 1850°F).

22. Catalyseur suivant la revendication 20, dans lequel le composé actif de g) est un composé de chrome.

23. Catalyseur suivant la revendication 20, dans lequel le composé actif de g) est un composé de métal de transition.

24. Procédé de polymérisation ou de copolymérisation d'oléfines, qui comprend la mise en contact desdites oléfines dans des conditions de polymérisation avec le catalyseur suivant l'une quelconque des revendications 20 à 23.